# EUROPEAN PATENT APPLICATION

(11) **EP 1 288 872 A2**
(43) Date of publication of application: **05.03.2003**
(21) Application number: 02250106.8
(22) Date of filing: 08.01.2002
(51) Int. Cl.: G07F 5/24

(54) **Change management**

(30) Priority: 27.08.2001 JP 2001255761
(71) Applicant: FUJITSU LIMITED, Kawasaki-shi, Kanagawa 211-8588 (JP)
(72) Inventor: Sato, Miyuki, c/o Fujitsu Limited, Kawasaki-shi Kanagawa 211-8588 (JP); Yamamoto, Hidehiko, c/o Fujitsu Limited, Kawasaki-shi Kanagawa 211-8588 (JP); Awatsu, Kiyotaka, c/o Fujitsu Limited, Kawasaki-shi Kanagawa 211-8588 (JP)
(74) Representative: Stebbing, Timothy Charles

(57) **Abstract**

A change management system (2) for use in a store or service provider, accumulating amounts of change normally returned in cash transactions and totalling the amounts of change accumulated by each customer. When a customer's total amount exceeds a predetermined threshold, the customer is notified so that he or she can receive some or all of the total amount, either as cash or by transfer to a bank account (12), as well as an incentive bonus which rewards the customer for their continued custom. An ATM (13) on the store premises may serve to issue the cash and/or the bonus.

## Description

The present invention relates to a system, a method, an apparatus and a program for change management, as well as to a cash dispenser, and more particularly to management of change to be returned to a customer as a balance of a cash payment (such as payment made with banknotes or large-denomination coins) for a transaction made in a store.

In customer management recently, service providers (e.g., retail stores) have been storing electronic information on change to be returned to customers as the balance of payments made with cash (banknotes and large-denomination coins) for purchase of one or more commodities, in a recording medium such as a pre-paid card. A customer having such a pre-paid card can pay for other transactions in the future using the change stored in the pre-paid card in the form of electronic information, or, when accumulated change in the pre-paid card reaches a predetermined amount, can receive a voucher for a predetermined value in return for the accumulated change. With this management method, customers no longer have to carry change (e.g. small-value coins) after buying a commodity or receiving services, and stores do not need to prepare an amount of change to be returned to customers as the balance of a transaction any longer.

At the same time, such a style of customer management costs the stores a great deal of money and labor to issue a pre-paid card to each customer.

In the meantime, automated teller machines (ATMs) installed in stores or the like serve as small branches of a financial institution, and customers using the ATMs may not necessarily become shoppers at the stores. Therefore, the installation of ATMs in the stores may not always result in increased custom.

With the foregoing problems in view, embodiments of the present invention can provide a system, an apparatus, and a method for management of change to be returned to an individual customer by a service provider as the result of a payment with one or more banknotes and/or large coins for a transaction (below, "cash payment") so that each customers can use the accumulated change with ease. Another embodiment of the present invention can provide a program (which may be stored on a computer readable medium) for management of such change so that each customer can use the accumulated change with ease. A further embodiment can provide a cash dispenser with which management of such change is performed so that each customer can use the accumulated change with ease.

According to a first aspect of the invention, there is provided a change management system comprising: (a) a change input section for inputting change information about an amount of change that is to be returned to an individual customer by a service provider as the balance of a cash payment at the service provider; (b) a change summing section for summing the individual amounts of change, which have been input by the change information input section, for each customer; (c) a judgment section for discriminating whether or not the total amount of change for an individual customer as the result of the summing by the change summing section reaches a predetermined amount; (d) a notifying section for, if the result of the discrimination by the judgment section is positive, notifying the individual customer of such positive result of the discrimination; and (e) a transfer transaction section for performing a transfer transaction of at least part of the total amount of change to an account of the individual customer.

As a result, when the total amount of change for an individual customer as the result of the summing by the change summing section reaches a predetermined amount, the positive result is notified to the individual customer and a transfer is made of at least part of the total amount of change to an account of the individual customer.

As a preferable feature, the change management system may further comprise a cash dispenser for dispensing that part of the total amount of change, which has been transferred to the account of the individual customer by the transfer transaction section, to that individual customer. Therefore, he or she can withdraw their change from their account, using the cash dispenser.

As another preferable feature, the transfer transaction section may perform the transfer transaction at the request of the individual customer, whose request is made on the cash dispenser designated by the service provider. Consequently, the customer makes arrangements for the transfer transaction on the cash dispenser designated by the service provider.

As still another preferable feature, the change management system may further comprise an incentive award granting section for granting an incentive award to the individual customer if the result of the discrimination by the judgment section is positive, so that the customer receives the incentive award when the total amount of change reaches the predetermined amount. As an additional feature, the incentive award granting section may be incorporated in the cash dispenser designated by the service provider thereby granting the incentive award to the individual customer on the cash dispenser designated by the service provider.

As a further preferable feature, the change management system may further comprise an incentive award selection section for offering a plurality of optional incentive awards, the incentive award granting section being responsive to the customer's selection using the incentive award selection section to grant the selected incentive award. As still further preferable feature, the incentive award selection section may be incorporated in the cash dispenser designated by the service provider.

A second aspect of the invention provides a change management apparatus comprising: (a) a change summing section for summing amounts of change that are to be returned to an individual customer by a service provider each as the balance of a cash payment for a service at the service provider; (b) a judgment section for discriminating whether or not the total amount of change for that customer summed by the change summing section reaches a predetermined amount; (c) a notifying section for, if the result of the discrimination by the judgment section is positive, notifying the customer of such positive result of the discrimination; and (d) a transfer transaction section for performing a transfer transaction of at least part of the total amount of change to an account of the customer.

A third aspect of the invention provides a change management method comprising the steps of: (a) inputting change information about an amount of change that is to be returned to an individual customer by a service provider as the balance of a cash payment for each service at the service provider; (b) summing the individual amounts of change, which have been input in the change information inputting step (a), for each customer; (c) discriminating whether or not the total amount of change for an individual customer as the result of the change summing step (b) reaches a predetermined amount; (d) if the result of the discriminating step (c) is positive, notifying that customer of such positive result of the discrimination; and (e) performing a transfer transaction of at least part of the total amount of change to the customer's account.

In a fourth aspect of the present invention, there is provided a program (which may be stored on a computer-readable medium) containing instructions for executing on a computer the steps of: (a) obtaining change information about an amount of change that is to be returned to an individual customer by a service provider as the balance of a cash payment for a service at the service provider; (b) summing the individual amounts of change, which have been input in the change information inputting step (a), for each customer; (c) discriminating whether or not the total amount of change for an individual customer as the result of the change summing step (b) reaches a predetermined amount; (d) if the result of the discriminating step (c) is positive, notifying the relevant customer of such positive result of the discrimination; and (e) performing a transfer transaction of at least part of the total amount of change to the customer's account.

As a result, when the total amount of change for an individual customer as the result of the summing reaches the predetermined amount, he or she is notified of this fact and some or all of the amount is placed in their account.

In a fifth aspect of the present invention, there is provided a cash dispenser for dispensing cash to customers, equipped with an incentive award granting section for granting an incentive award to an individual customer if the sum of individual amounts of change that are to be returned to that customer by a service provider, each as the balance of a respective cash payment for a service at the service provider, reaches a predetermined amount.

In the above first to fifth aspects of the invention, "service provider" includes retail stores and the like, and "service" includes the purchase of a commodity.

As described above, it is possible for a system, an apparatus and a method for management of change, a change management program, and a cash dispenser to guarantee the following advantages:
(1) Individual amounts of change for each customer, which is to be returned to the customer, are accumulated to form a running total for each customer. Subsequently, when the total amount for an individual customer, as the result of the summing, reaches a predetermined amount, at least part of the total amount is transferred to that customer's account. Therefore, it is possible for a customer to receive the change with ease, providing a great deal of convenience to both customers and the service provider. Especially for the service provider's benefit, it is also possible to attract repeat-customers in making transactions with the service provider.
(2) Since the change management system comprises a cash dispenser from which customers can withdraw change transferred to their accounts, it is possible to enhance convenience of the customers and the service provider. Especially for the service provider's benefit, it is also possible to attract repeat-customers in making transactions with the service provider.
(3) Since change can be obtained from the cash dispenser designated by the service provider at the request of each individual customer, more customers come to a store in which the cash dispenser is installed. As a result, it is possible for the service provider to have a greater opportunity to enhance its sales in the store. At the same time, the work-rate of the cash dispenser may rise.
(4) Since granting of an incentive award when the total amount of change reaches a predetermined amount encourages customers in making transactions in such a manner that the total amount of change for each customer reaches the predetermined amount, the number of transactions made between customers and the service provider will increase.
(5) Since each customer selects an incentive award among a plurality of optional incentive awards, customers can receive the kind of award they prefer. Therefore it is possible to improve service to the customers.
(6) Since the cash dispenser, which has been designated by the service provider, grants incentive awards to customers whose total amounts of change are discriminated to reach a predetermined amount, the customers make arrangements for receiving the incentive awards at the cash dispenser. As a result, more customers come to a store or the like in which the cash dispenser is installed, whereupon it is possible for the store or the like to have the opportunity for enhancing its sales, increasing a work-rate of the cash dispenser.
(7) Since each customer selects at least one incentive award among a plurality of optional incentive awards, the customers make arrangements for receiving the incentive awards at the cash dispenser. As a result, more customers come to a store or the like in which the cash dispenser is installed, again giving the opportunity to enhance sales, and increasing the use level of the cash dispenser.

Reference will now be made, by way of example only, to the accompanying drawings in which:
FIG. 1 is a block diagram schematically showing a change management system according to an embodiment of the present invention;
FIG. 2 is a perspective view illustrating an automated teller machine (ATM) included in the change management system of FIG. 1;
FIG. 3 is a table showing an example of contents of a customer database (DB) in the change management system of FIG. 1;
FIG. 4 is a table showing an example of contents of an incentive award database in the change management system of FIG. 1;
FIG. 5 is a table showing an example of contents of an incentive award exchanging database in the change management system of FIG. 1;
FIG. 6A is a block diagram schematically showing a process performed in the change management system of FIG. 1 until the total amount of change for an individual customer reaches a bonus level;
FIG. 6B is a table showing an example of the customer DB in which contents of the transaction of FIG. 6A are recorded;
FIG. 7 is a block diagram schematically showing a process performed in the change management system of FIG. 1 when the total amount of change for an individual customer reaches the bonus level;
FIG. 8 is a diagram illustrating an example of a bonus level achievement notifying receipt in the change management system of FIG. 1;
FIG. 9 is a diagram illustrating an example of a bonus level achievement notifying mail in the change management system of FIG. 1;
FIG. 10A is a diagram schematically showing an example of a main menu screen displayed on a display/inputting section of the ATM in the change management system of FIG. 1;
FIG. 10B is a diagram schematically showing an example of an incentive award ordering screen displayed on the display/inputting section;
FIG. 11A is a diagram schematically showing an example of the main menu screen displayed on the display/inputting section of the ATM in the change management system of FIG. 1;
FIG. 11B is a diagram schematically showing an example of the incentive award receiving screen displayed on the display/inputting section;
FIG. 12 is a flow diagram illustrating a succession of procedural steps for accumulating change for each customer in the change management system of FIG. 1;
FIG. 13 is a flow diagram schematically illustrating a succession of procedural steps for receiving summed (accumulated) change and an incentive award in the change management system of FIG. 1; and
FIG. 14 is a block diagram schematically showing a succession of procedural steps for receiving accumulated change and an incentive award in the change management system of FIG. 1.

A preferred embodiment of the present invention will now be described with reference to the accompanying drawings.

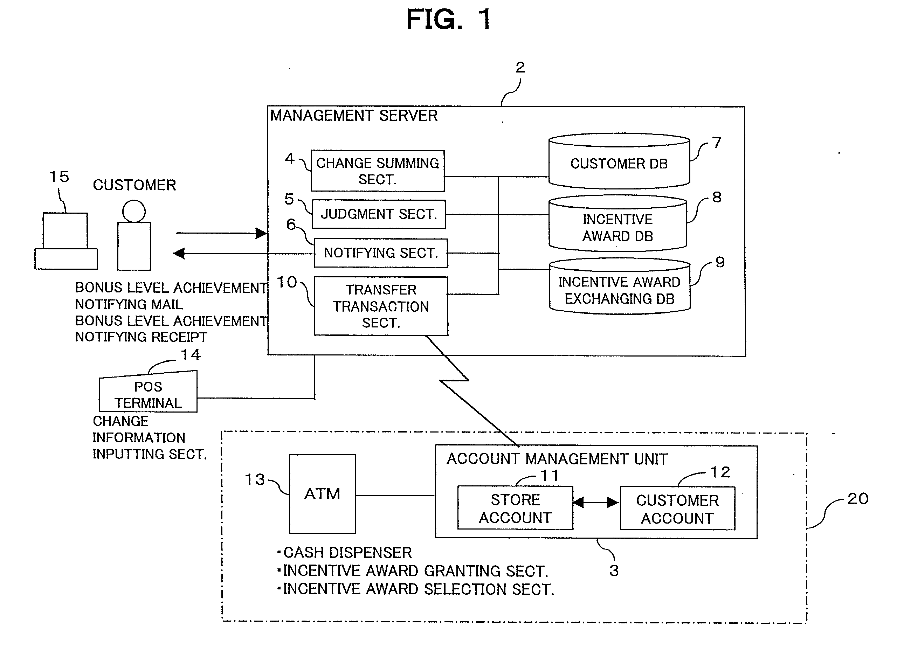

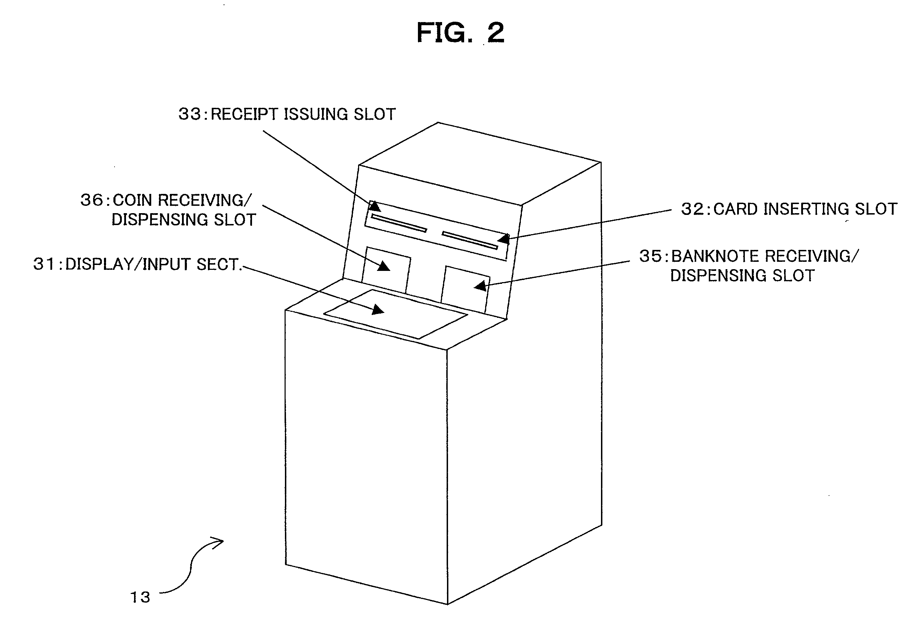

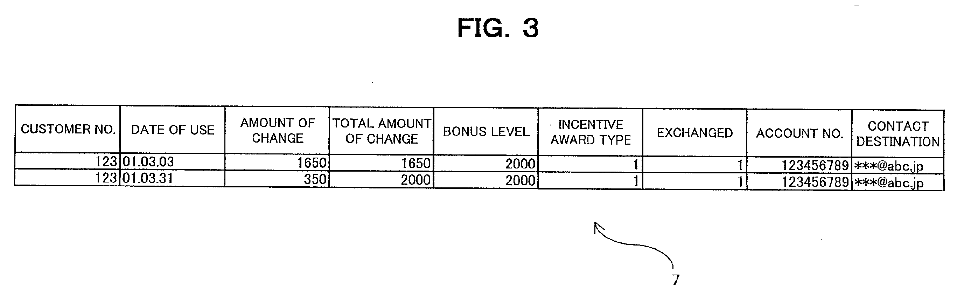

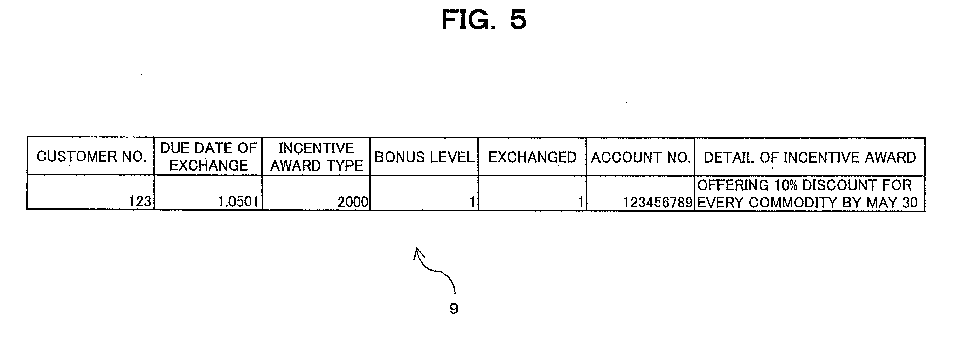

FIG. 1 shows a change management system 1 according to an embodiment of the present invention; FIG. 2 is a perspective view illustrating an automated teller machine (a cash dispenser, hereinafter simply called an ATM) included in the change management system 1; and FIG. 3, 4 and 5 tables respectively show examples of the contents of a customer database (DB), an incentive award DB, and an incentive award exchanging DB in the change management system 1.

The change management system 1 manages change owed to customers by a service provider (such as a manager and clerks of a store, hereinafter also called a store manager), which provides service to customers or provides commodities to be purchased by customers, as the balance remaining from a larger-denomination payment in respect of each service or commodity. As shown in FIG. 1, the change management system 1 comprises a management server 2 (a change management apparatus, a change summing section, a judgment section, a notifying section, a transfer transaction section), a POS terminal 14 (a change information inputting section), an account management unit 3, an ATM 13 (a cash dispenser, an incentive award granting section, an incentive award selection section), and a customer terminal 15 (an incentive award selection section).

In the change management system 1, the management server 2 sums (accumulates) the individual amounts of change that are to be paid to each customer in respect of individual cash payments, made on different occasions, for transactions performed on the POS terminal 14. For example, a customer may regularly use a certain service or buy a certain item from the service provider (the store). When the total amount of change, which has been summed by the management server 2, for an individual customer reaches a predetermined amount, at least part of the predetermined amount (which may be designated by the individual customer) is transferred to a customer account 12 in a financial institution 20.

In addition, or alternatively, in place of (part of) the accumulated total, when the total amount of change for a customer reaches the predetermined amount, the service provider offers the customer an incentive award exemplified by a discount coupon acceptable to designated stores, or a check for cash or a commodity. At that time, the customer makes arrangements for receiving the incentive award only via ATM 13.

The POS (Point Of Sales) terminal 14 is, for example, installed at a register in a store and is communicably connected to the management server 2. From the POS terminal 14, clerks at the store input information about sales or service transactions. One POS terminal 14 appears in FIG. 1, however a plurality of POS terminals 14 may of course be included in the change management system 1.

The POS terminal 14 sends the management server 2 customer information (customer No.) to identify an individual customer, an amount of cash (banknotes and large coins) paid by a customer (an amount of a payment), an amount of change left over after deducting the payment in addition to information (a name and a price of a commodity being purchased, etc.) about a transaction between the store and the customer. Namely, the POS terminal 14 serves to function as a change information inputting section to input change information about the amount of change to be paid.

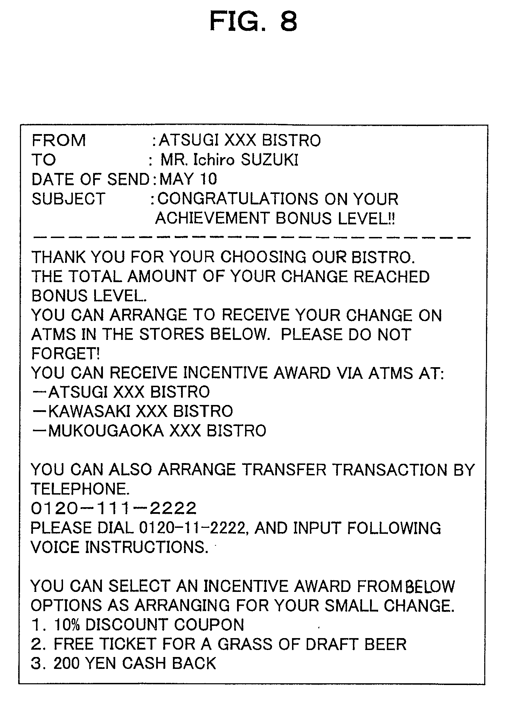

For example, the POS terminal 14 is equipped with a non-illustrated card reader to read information (e.g., customer No.) previously registered in a card, such as a membership card or a credit card, in order to identify each customer. The POS terminal 14 is also equipped with a non-illustrated receipt printer in order to issue a bonus level achievement notifying receipt (which will be described in detail later with reference to FIG. 8) when a notifying section 6 in the management server 2 notifies the POS terminal 14 that a total amount of change for a specific customer has reached a predetermined amount.

The management server 2 sums individual amounts of change owed to each customer as he or she makes repeated purchases for cash, and performs various processes based on the result of the summing. The management server 2 comprises a change summing section 4, a judgment section 5, a notifying section 6, a transfer transaction section 10, a customer DB (database) 7, an incentive award DB (database) 8, and an incentive award exchanging DB (database) 9.

The management server 2 is in the form of an information processor exemplified by a computer system. The management server 2 functions as the change summing section 4, the judgment section 5, the notifying section 6, and the transfer transaction section 10 by a CPU (Central Processing Unit), which is incorporated in the information processor, executing a (change management) program. The program may be recorded in a computer-readable medium (e.g., a memory, a magnetic storage, a floppy disk, a memory card, a magnetooptical storage, a CD-ROM, a CD-R a CD-RW, a DVD, a DVD-R, a DVD-RW).

In the change management system 1, return of change as the balance of payments for transactions performed on the POS terminal 14, conventionally carried out by handing over coins or banknotes, is replaced by storing electronic information containing amounts of change in the customer DB 7 where individual amounts of change for each customer are summed to be used for a future transfer of accumulated change.

The customer DB 7 in the management server 2 retains a transaction history for each customer. As shown in FIG. 3, the customer DB 7 has indexes of a customer No., a date of use, an amount of change, the total amount of change, a bonus level, an exchanged flag, an account No., and a contact destination that are correlated with one another.

A unique customer No. is set for each individual customer for identification purposes and is obtained by the card reader of the POS terminal 14. A date of use represents the day when a transaction is performed. An amount of change represents an amount of change that is to be returned to a customer as the balance of a payment for the transaction. The total amount of change is a sum of the individual amounts of change that are to be returned to an individual customer and is computed by the change summing section 4. A bonus level previously set for each customer represents a predetermined standard amount of summed change used when the judgment section 5 judges whether or not the summed change should be transferred to a customer account. In the illustrated embodiment, the bonus level is set to the total amount of 2,000 yen.

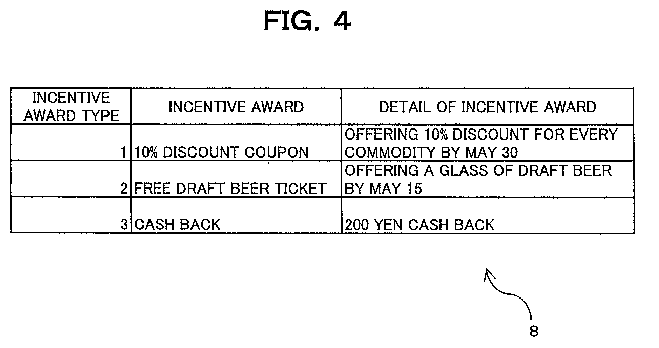

An incentive award type specifies an incentive award to be granted to each customer among a plurality of optional incentive awards registered in the incentive award DB 8 (see FIG. 4). In the illustrated example, each customer selects one of three optional incentive awards. An exchanged flag represents whether or not a customer has received an incentive award and is indicated by the number 0 or 1. An account No. represents the number of a customer account of a financial institution 20 (FIG. 1), and is used to identify each customer account 12. A contact destination is exemplified by an e-mail address, a residential address, a telephone number, and a facsimile number of each customer previously registered, and is used as a contact with each customer. In an example of the customer DB 7 in FIG. 3, a contact destination is the customer's e-mail address.

In this embodiment, each customer previously registers for membership so that the customer DB 7 has information on the above-mentioned indexes with respect to each customer.

The indexes contained in the customer DB 7 should by no means be limited to those described with reference to FIG. 3, and another index may be used within the scope of the present invention.

The incentive award DB 8 contains information about one or more incentive awards that are to be granted to customers when their total amount of change, as the result of the summing (totalling) by the change summing section 4, reaches a predetermined amount. As shown in FIG. 4, the incentive award DB 8 has indexes of an incentive award type, an incentive award, and details of an incentive award.

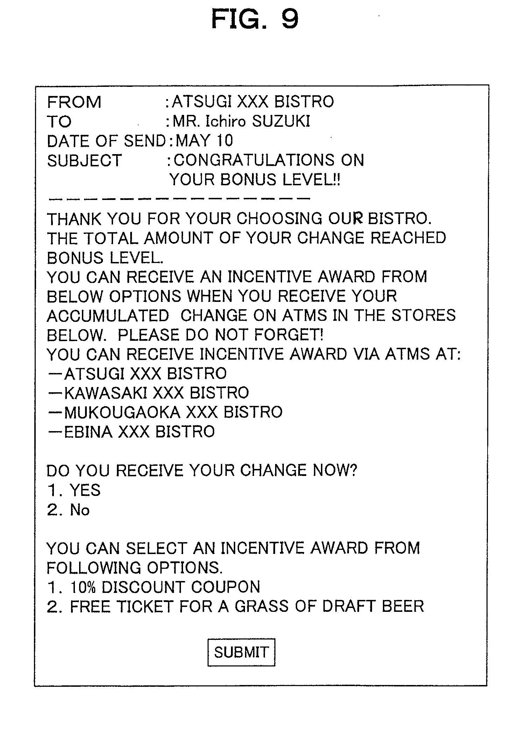

An incentive award index lists a plurality of optional incentive awards, such as a 10% discount coupon, a free draft beer ticket, and cash back as shown in FIG. 4. A detail of an incentive award represents contents and an expiration of each incentive award, and is notified to an individual customer by means of a bonus level achievement notifying receipt (FIG. 8) or a bonus level achievement notifying mail (FIG.9). An incentive award type is a number (an integer such as 1 to 3 in FIG. 4) identifying each optional incentive award.

The indexes contained in the incentive award DB 8 may vary from those described with reference to FIG. 4.

The incentive award exchanging DB 9 stores a history of incentive awards granted to customers and contains indexes of customer No., due date of exchanging, bonus level, incentive award type, exchanged flags, account Nos., and details of incentive awards by correlating all indexes with one another.

A customer No. is used to identify an individual customer. A due date of exchanging is the expiry date of each incentive award. A bonus level represents a predetermined standard amount of summed change used when the judgment section 5 judges whether or not the summed change should be transferred to a customer account. An incentive award type specifies an incentive award to be granted to each customer among a plurality of optional incentive awards. An exchanged flag represents whether or not an individual customer has received an incentive award. An account number identifies each customer account 12. A detail of an incentive award represents contents of each incentive award. A customer No., a bonus level, an exchanged flag, and an account No. are identical with those contained in the customer DB 7 described with reference to FIG. 3. An incentive award type and a detail of an incentive award are identical with those contained in the incentive award DB 8 described with reference to FIG. 4.

The change summing section 4 sums individual amounts of change for each customer that have been input and sent by the POS terminal 14, and registers the total amount in the customer DB 7.

The judgment section 5 discriminates whether or not the total amount of change for an individual customer has reached any bonus level (one or more thresholds), and, if the result of the discrimination is positive, notifies the notifying section 6 of the positive result.

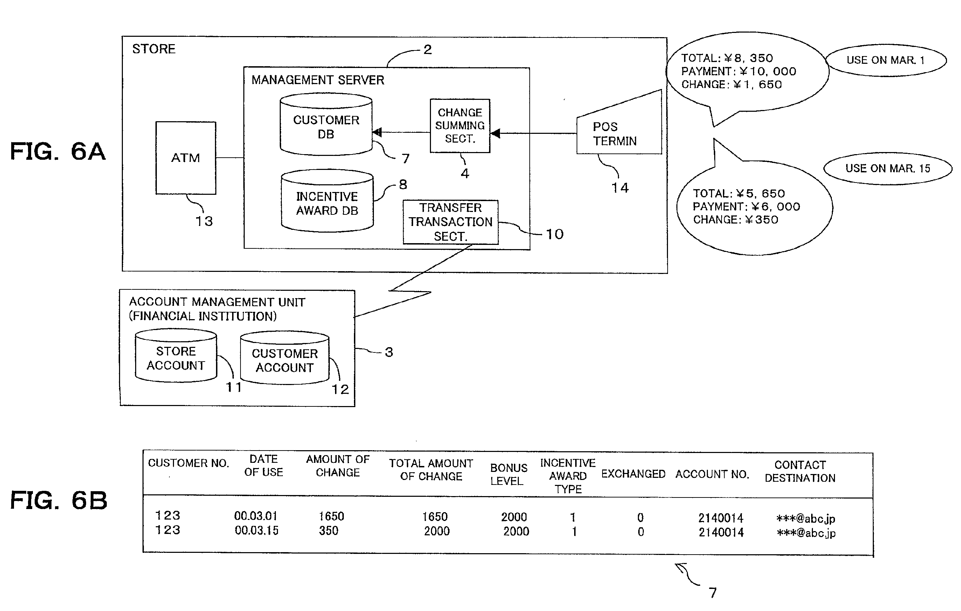

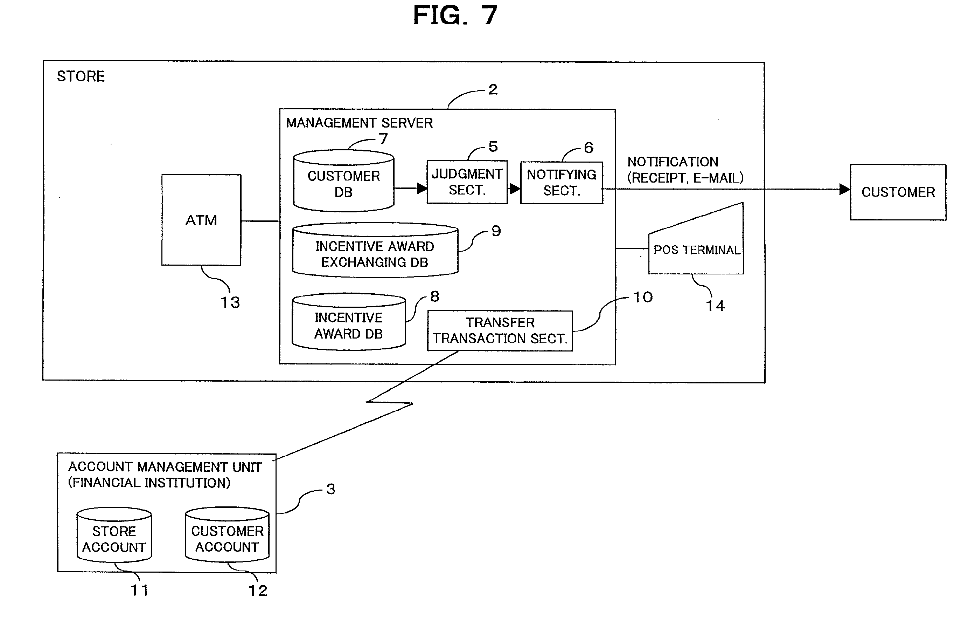

FIG. 6A shows a process performed in the change management system 1 until the total amount of change for an individual customer reaches the bonus level; FIG. 6B shows an example of the customer DB 7 in which contents of the transaction of FIG. 6A are recorded; FIG. 7 shows a process performed in the change management system 1 when the total amount of change for an individual customer reaches the bonus level.

Amounts of change (1,650 yen on March 1, and 350 yen on March 15 in FIG. 6A) for a customer as the balance of payments for transactions performed on the POS terminal 14 are registered in the customer DB 7 together with the total amount of change for the customer, which has been obtained by change summing section 4 by summing individual amounts of change. After that, the judgment section 5 compares the total amount of change for the customer with the bonus level.

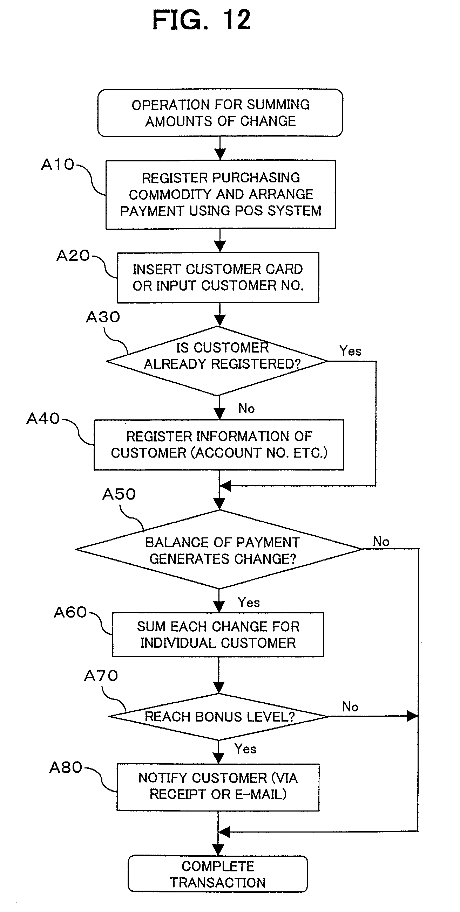

If the judgment section 5 discriminates that the total amount of change reaches the bonus level (the result of the discrimination is positive), the notifying section 6 notifies the customer of the positive result as described later with reference to FIG. 12.

The transfer transaction section 10 performs a transfer transaction of all or part of the total amount of change to an account of the customer. Responding to the customer's decision to receive the accumulated change (the summed change), the transfer transaction section 10 orders the account management unit 3 to transfer at least part of the total amount of change, which has been summed by the change summing section 4, to the customer account 12 from the store account 11.

Here, the amount of cash to be transferred to the customer account 12 may be the same amount as the bonus level previously registered in the customer DB 7, or may be an amount less than the total amount of change.

The positive result in the judgment section 5 causes the notifying section 6 to further notify the customer of the positive result via an e-mail or a receipt, as shown in FIG 7. In the illustrated embodiment, the notification to the customer takes the form of a bonus level achievement receipt handed to the individual customer when performing the transaction, or a bonus level achievement mail sent to an e-mail address of the customer. The notification method is selectively switched between a bonus level achievement receipt and a bonus level achievement mail at the convenience of each customer and the store.

FIGS. 8 and 9 respectively show examples of a bonus level achievement receipt and a bonus level achievement mail in the change management system 1.

When notification of achievement of the bonus level is performed via a bonus level achievement receipt, the notifying section 6 prints information in addition to the achievement of the bonus level on the receipt. The information contains: (i) one or more particular ATMs designated by the store; (ii) notification that the individual customer can make arrangements for receiving the accumulated change on the particular ATMs; and (iii) notification that the individual customer can arrange the reception by telephone. Further, optional incentive awards, any one of which are to be granted to the individual customer, are also attached to the bonus level achievement receipts.

The individual customer has to notify agreement to receive the accumulated change to the management server 2 in order to arrange the reception of the accumulated change. For that purpose, if the notification is performed by the bonus level achievement receipt, the individual customer notifies an operator in the change management system 1 of the decision, or inputs the decision on the ATM 13 thereby letting the management server 2 know of the decision.

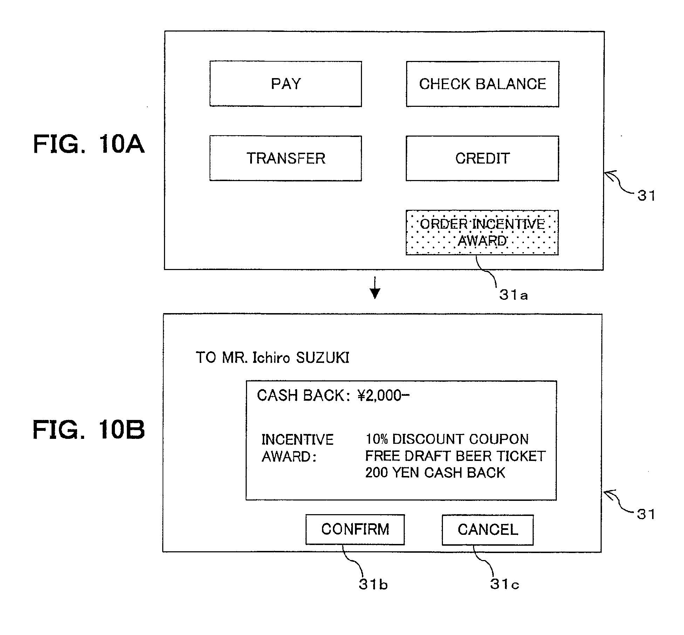

It may be impractical that all the ATMs 13 of the financial institution 20 function to arrange transfer transactions of change, and therefore, it is reasonable that particular ATMs (hereinafter also called designated ATMs) 13 that are designated by the service provider function to make the arrangements. The particular ATMs 13 function to issue change and an incentive award as described later with reference to FIG. 10. The service provider asks an individual customer to make arrangements for a transfer transaction of change on a designated ATM 13. Alternatively, an individual customer may notify the decision to receive accumulated change to a clerk at the store.

When notification of achievement of a bonus level is performed via a bonus level achievement mail, the notifying section 6 provides other information in addition to the achievement of the bonus level. As shown in FIG. 9, the information contains: (i) one or more designated ATMs 13; (ii) notification that the individual customer can receive an incentive award upon making arrangements for a transfer transaction of the accumulated change on any one of the designated ATMs. The service provider confirms whether or not the customer wishes to receive the accumulated change, and shows the customer the optional incentive awards, any one of which are to be granted.

Confirmation of whether or not an individual customer wishes to receive accumulated change may be executed by the individual customer by sending a return e-mail to the service provider (the change management system 1), which has sent the bonus level achievement mail, with the customer's decision to receive the change. As an alternative, the confirmation may be carried out by accessing a particular web site where the customer inputs the decision, by notifying the decision to an operator in the change management system 1 by telephone, or by directly telling a clerk at the store of the decision.

The notification of achievement of the bonus level should by no means be limited to via a bonus level achievement receipt or a bonus level achievement mail, and may be performed by telephone or facsimile. Other alternatives are possible without departing from the scope of the present invention.

A customer terminal 15 is an information processor, such as a personal computer or a mobile telephone, with which a customer accesses the Internet to browse web sites and send/receive e-mails.

With the customer terminal 15, each customer receives a bonus level achievement mail sent from the notifying section 6, and accesses the particular web site to reveal a decision to receive accumulated change to the management server 2 and to select an incentive award from a plurality of optional incentive awards.

The account management unit 3 manages credits and debits recorded in the store account 11 and each customer account 12 of the financial institution 20. Responding to a transfer request from the transfer transaction section 10, the account management unit 3 transfers change of a certain amount (in this embodiment, the bonus level) to the customer account 12 from the store account 11.

The store account 11 may be possessed by the store manager or the store.

The ATM 13 dispenses cash that has been transferred to the customer account 12 as accumulated change for each customer and is installed in a financial institution, a store or the like. One ATM 13 appears in FIG. 1, however a plurality of ATMs 13 may of course be installed in the change management system 1.

The financial institution 20 manages the account management unit 3 and the ATMs 13.

The ATM 13 is equipped with a display/input section 31, a card inserting slot 32, a receipt issuing slot 33, a bill receiving/dispensing slot 35, and a coin receiving/dispensing slot 36.

The display/inputting section 31 is in the form of a touch panel or the like, and displays various kinds of information for customers and also serves to function as an input device, such as a keyboard and buttons. On the basis of information displayed on the display/inputting section 31, customers execute various input operations. The information input via the display/inputting section 31 may be an amount of cash to be paid to a customer, or a password set for the customer account 12.

The display/inputting section 31 of a touch panel performs both displaying and inputting, however the display/inputting section 31 should by no means be limited to a combined form. As an alternative, the display/inputting section 31 may be in a separate form of a monitor to display information and an inputting device (e.g., a keyboard) to perform input operations.

The card inserting slot 32 accepts a medium (e.g., a magnetic card, an IC card) in the form of a cash card or a credit card (hereinafter simply called a card) to identify each account of a customer. Contents registered in a card inserted from the card inserting slot 32 are read by a non-illustrated card reader of the ATM 13. The card inserting slot 32 also ejects a card inserted into the ATM 13 to return the card to a customer upon completion of a cash dispensing transaction.

The banknote receiving/dispensing slot 35 releases banknotes transferred by a non-illustrated banknote transferring section from the ATM 13 as dispensing cash to a customer, and receives banknotes inserted by a customer who intends to record a credit to an account. Likewise, the coin receiving/dispensing slot 35 releases coins transferred by a non-illustrated coin transferring section from the ATM 13 when dispensing cash to a customer, and receives coins from a customer that intends to record a credit to an account. The receipt issuing slot 33 issues a receipt on which transaction contents are recorded, and a bonus level achievement receipt to customers.

The ATM 13 prints (outputs) an incentive award, which is to be granted to each customer as the total amount of change for each customer to reach a bonus level, besides executing primary functions as the above-mentioned cash dispenser.

For example, the ATM 13 prints a plurality of optional incentive awards (a 10% discount coupon, a free draft beer ticket, a 200 yen cash back), which have been previously registered in the incentive award DB 8, onto a receipt as an exchange check, and then issues a receipt from the receipt issuing slot 33 to a customer. One of the optional incentive awards on the receipt is granted to the customer when the customer submits the receipt to the store.

FIGS. 10A and 10B respectively show an example of a screen on the display/inputting section 31 of the ATM 13. More specifically, FIG. 10A shows an example of a main menu screen and FIG. 10B shows an example of incentive award ordering screen. In this example, a customer selects one of three optional incentive awards --a 10% discount coupon, a free draft beer ticket, a 200 yen cash back-- in FIG. 10B.

The main menu screen and the incentive award ordering screen in FIGS. 10A and 10B are displayed only on the particular ATMs 13 that are designated by the store.

When a customer who has received a bonus level achievement receipt as shown in FIG. 8 presses an incentive award ordering button 31a in the main menu screen (FIG. 10A) on the display/inputting section 31 of a particular ATM 13, which has been designated in the bonus level achievement receipt issued by the store, the account management unit 3 transfers the total amount (2,000 yen in the illustrated example) of accumulated change for the customer to the customer account 12. After that, the display/inputting section 31 displays an incentive award ordering screen so that the customer selects a desired incentive award from the three available.

The customer selects one from three optional incentive awards, "10% discount coupon", free draft beer ticket and "200 yen cash back", and then presses a confirm button 31b. On the other hand, pressing of a cancel button 31c cancels the foregoing selection of an incentive award.

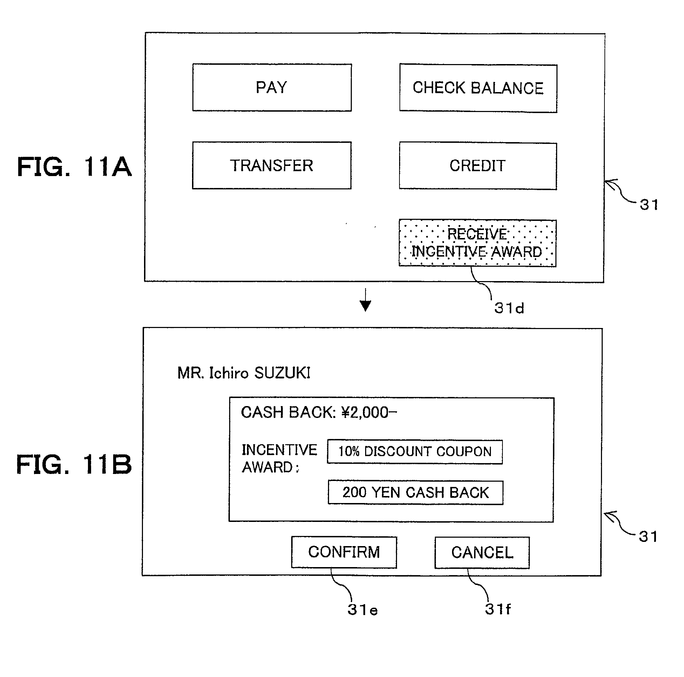

FIGS. 11A and 11B respectively show another example of a screen on the display/inputting section 31 in the ATM 13. More specifically, FIG. 11A shows an example of a main menu screen and FIG. 11B shows an example of an incentive award receiving screen. In this example, a customer selects as an incentive award either a 10% discount coupon, or 200 yen cash back in FIG. 11B. These screens of FIGS. 11A and 11B are displayed only on particular ATMs 13 designated by the store.

After receiving a bonus level achievement notifying mail as shown in FIG. 9, a customer selects an incentive award receiving button 31d on the main menu screen (FIG. 11A) displayed on a particular ATM 13 designated in the received bonus level achievement notifying mail. Whereupon, the display/inputting section 31 displays an incentive award selecting screen shown in FIG. 11B.

With reference to the incentive award selecting screen, the customer selects either one of "10% discount coupon" and "200 yen cash back" and presses a confirm button 31e thereby determining the incentive award to be granted to the customer. Here, selection of a cancel button 31f instead of the confirm button 31e cancels the preceding selection of an incentive award by the customer.

In the change management system 1, when the judgment section 5 determines that an amount of accumulated change for an individual customer has reached a predetermined amount (a bonus level), the management server 2 performs and controls various operations so as to grant an incentive award to the customer. The ATM 13 grants an incentive award to the customer under the control of the management server 2. More specifically, the management server 2 controls the ATM 13 in such a manner that the customer selects the desired incentive award on the ATM 13.

These functions executed by the management server 2 are realized by a CPU (central processing unit) executing a program, which may be stored in a computer-readable recording medium.

A succession of procedural steps of accumulating change for each customer in the change management system 1 will now be described with reference to flow diagram FIG. 12 (Steps A10 through A80).

First of all, when a transaction has taken place at the POS terminal 14, the POS terminal 14 sends information about the commodity being purchased by a customer and payment for the transaction to the management server 2, which registers the purchased commodity, and makes arrangements for the payment (Step A10).

Then, the POS terminal 14 obtains the number of the customer by reading information about the customer registered in a membership card, which is shown by the customer, via the card reader (not shown), or by receiving the number of the customer from a keyboard or the like (Step A20), and then the read customer No. is sent to the management server 2.

Upon receipt of the customer No., the management server 2 determines whether or not the customer DB 7 has a record corresponding to the received customer No. (Step A30). If so (Yes route in Step A30), the management server 2 determines whether or not the cash payment tendered for the transaction will generate change (Step A50). A negative result of the determination (No route in Step A50) completes the procedural steps.

At Step A30, when the customer has not been registered in the customer DB 7 (No route in Step A30), the customer DB 7 registers information (e.g., an account number and a contact destination) about the customer (Step A40) and then proceeds to Step A50.

The customer information should by no means be limited to being registered during the procedural steps. Alternatively, if the customer information has not been registered (No route in Step A30), the procedural steps may terminate and the registration may be performed separately from the procedural steps.

If the transaction generates any change (Yes route in Step A50), the change summing section 4 adds the relevant amount(s) of change to the total accumulated to date for that customer, and stores the new total in the customer DB 7 (Step A60). After that, the judgment section 5 discriminates whether or not the total amount of change has reached a predetermined amount (Step A70). If the result of the discrimination is negative (No route in Step A70), the procedural steps are complete.

Conversely, if the result of the discrimination is positive (i.e., the total amount reaches the predetermined amount; Yes route in Step A70), the notifying section 6 causes the POS terminal 14 to create a bonus level achievement receipt or to send a bonus level achievement mail to the customer (with reference to a contact destination in the customer DB 7), thereby notifying them of reaching the bonus level (Step A80).

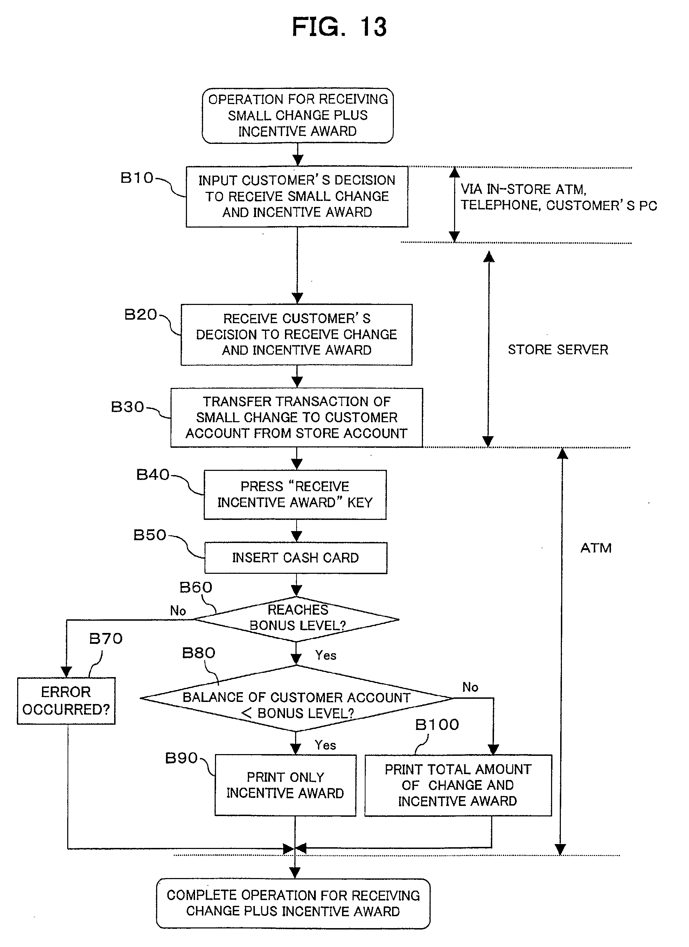

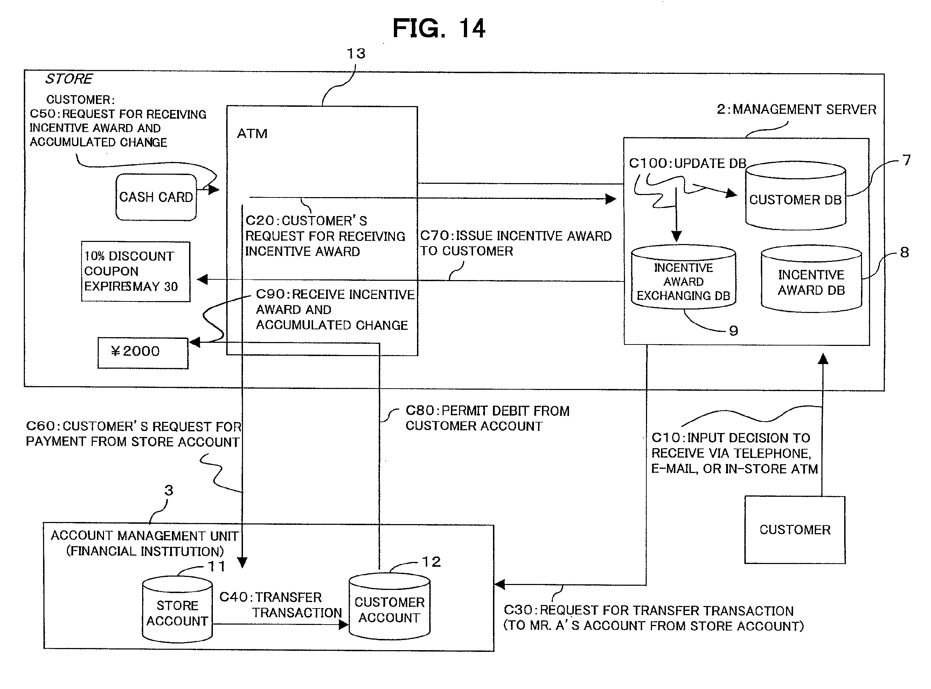

Here, a succession of procedural steps (Steps B10 through B100 in flow diagram FIG. 13) of a customer receiving accumulated change and an incentive award will now be described with reference to FIG. 14. FIG. 14 schematically illustrates a succession of procedural steps of receiving accumulated change and an incentive award in the change management system 1.

First, the customer indicates that he wishes to receive the accumulated change of the bonus level and an incentive award via the customer terminal 15 to the management server 2 (Step B10 in FIG. 13, Arrow C10 in FIG. 14). The notification is carried out by an e-mail sent to an administrator of the change management system 1, by input information on a designated web site or on the ATM 13, or by telephone or facsimile. The management server 2 receives the customer's decision (Step B20 in FIG 13, Arrow C20 in FIG. 14).

The transfer transaction section 10 instructs the account management unit 3 to perform a transfer transaction of change of the bonus level (2,000 yen in this example) to the customer account 12 from the store account 11 (Step B30 in FIG. 13, Arrows C30 and C40 in FIG. 14).

The customer presses (selects) an incentive award ordering button 31a or an incentive award receiving button 31d on the ATM 13 designated in the received bonus level achievement receipt or the received bonus level achievement mail (Step B40 in FIG. 13, Arrow C50 in FIG. 14). At that time, the customer also inserts a customer cash card into the card inserting slot 32 to withdraw the transferred change (Step B50 in FIG. 13, Arrows C50 and C60 in FIG. 14). The ATM 13 sends the management server 2 information (the number of the customer's account and identification data) registered in the inserted cash card. The management server 2 identifies the customer based on the information sent by the ATM 13 and confirms whether or not the total amount of change for the customer has reached a bonus level (Step B60 in FIG. 13).

If not (No route in Step B60 in FIG. 13), the ATM 13 displays the negative result of the confirmation on the display/inputting section 31 (an error routine, Step B70 in FIG. 13) to complete the procedural steps.

If the total amount of change reaches the bonus level (Yes route in Step B60 in FIG. 13), the management server 2 further determines whether or not the remainder of the customer account 12 is lower than the bonus level (Step B80 in FIG. 13). If the remainder is lower than the bonus level (Yes route in Step B80), the ATM 13 prints only an incentive award that has been selected by the customer on a receipt and issues the receipt to the customer (Step B90 in FIG 13, Arrow C70 in FIG. 14) to complete the procedural step.

If the remainder is higher than the bonus level (No route in Step B80 in FIG. 13, Arrow C80 in FIG. 14), bonus level cash is withdrawn from the customer account 12 and is issued to the customer from the ATM 13, and the ATM 13 prints an incentive award that has been selected by the customer on a receipt (Step B100 in FIG. 13, Arrows C70 and C90 in FIG. 14). The management server 2 updates the customer DB 7 and the incentive award exchanging DB 9 (Arrow C100 in FIG. 14) to complete the procedural steps.

As mentioned above, in the change management system 1 of the illustrated embodiment, the change summing section 4 keeps a tally of individual amounts of change owed to each customer from past transactions. Subsequently, when the total of these individual amounts of change, as the result of the summing of the change summing section 4, reaches a predetermined amount (at least one bonus level), the notifying section 6 notifies the customer that he has attained a bonus level. Further, since the accumulated change of the bonus level is transferred to a customer account, it is possible for a customer to receive the accumulated change with ease. Such a change management method provides a great deal of convenience to both customers and the store. Especially in the case of stores, it is also possible to attract repeat-customers.

Granting of an incentive award when the total amount of change reaches a predetermined amount encourages customers to accumulate change, whereupon an increased number of customers would frequently shop, eat, and receive service in stores that use the change management system 1.

Customers who intend to receive incentive awards perform operations (e.g., pressing the incentive award receiving button 31a) on particular ATMs 13 designated by a store. As a result, since the customers have to come to stores where the particular ATMs 13 are installed to receive incentive awards, it is possible for the stores to have greater opportunity to enhance their sales, and it is also possible for the particular ATMs to improve their work-rates.

Pressing of the incentive award ordering button 31a on the particular ATMs 13, which are designated by the store, causes the transfer transaction section 10 to transfer accumulated change to a customer account 12. Therefore, customers that have no customer terminals 15 or that are unable to handle a customer terminal 15 come to the stores, in which the designated ATMs 13 are installed, to get the award. Since more customers come to the stores with the particular ATMs 13, it is possible for the stores to have greater opportunity to enhance their sales, and it is also possible for the particular ATMs to improve their usage levels.

Further, as the receipt issuing slot 33 in the ATM 13 issues an exchange check (a receipt on which contents of an incentive award is printed) to receive an incentive award to be granted to a customer, it is possible for the stores to grant incentive awards to customers with ease, reducing their labor.

A customer selects from plural optional incentive awards by inputting information on the display/inputting section 31 on the ATM 13. As a result, customers may receive a desired incentive award, whereupon it is possible to improve service to customers.

Partly since a customer makes arrangements to receive accumulated change by inputting information from a customer terminal 15 and partly since the transfer transaction section 10 instructs the account management unit 3 to perform a transfer transaction of the accumulated change to a customer account 12 based on the inputted information, it is possible for customers to receive accumulated change with ease, thereby improving service to customers.

Also in this case, the customer has to come to the stores with the particular ATMs 13, which have been designated by the stores, even if the customer has made arrangements via the customer terminal 15 and, therefore, it is possible for the stores to keep attracting customers to shop, eat, and receive other services.

The present invention should by no means be limited to this foregoing embodiment, and various changes or modifications may be suggested without departing from the scope of the invention.

In the example described with reference to flow diagram FIG. 13, a customer receives both accumulated change and an incentive award due to operations performed on the ATM 13. Alternatively, a customer may of course receive only an incentive award on the ATM 13.

Customers can use change that has been transferred to customer accounts 12 as currency or credits, and therefore can withdraw the transferred change using an ATM other than the particular ATMs 13, which are designated by the change management system 1. Namely, if customers do not wish to be granted incentive awards, the customers are free to withdraw transferred change using ATMs other than the particular ATMs 13 designated. Further, change that has been transferred to a customer account 13 may be used for a direct debit of the customer account, such as a payment for a utility bill. A plurality of bonus levels may be provided as a series of increasing steps, attracting progressively enhanced incentive awards.

## Claims

1. A change management system comprising:
(a) a change information input section (14) for inputting change information about an amount of change that is to be returned to an individual customer by a service provider as the balance of a cash payment for a service at the service provider;
(b) a change summing section (4) for summing the individual amounts of change, which have been input by said change information input section (14), for each customer;
(c) a judgment section (5) for discriminating whether or not the total amount of change for an individual customer as the result of the summing by said change summing section (4) reaches a predetermined amount;
(d) a notifying section (6) for, if the result of the discrimination by said judgment section (5) is positive, notifying said individual customer of such positive result of the discrimination; and
(e) a transfer transaction section (10) for performing a transfer transaction of at least part of said total amount of change to an account of said individual customer.

2. A change management system according to claim 1, further comprising a cash dispenser (13) for dispensing said at least part of said total amount of change, which has been transferred to the account of said individual customer by said transfer transaction section (10), to said individual customer.

3. A change management system according to claim 2, wherein said transfer transaction section (10) performs said transfer transaction at the request of said individual customer which request is made on said cash dispenser (13) designated by the service provider.

4. A change management system according to any one of claims 1, 2 and 3, further comprising an incentive award granting section (13) for granting an incentive award to said individual customer if the result of the discrimination by said judgment section (5) is positive.

5. A change management system according to claim 4, further comprising an incentive award selection section (13) for offering a plurality of optional incentive awards for selection by said individual customer,
said incentive award granting section (13) being responsive to said individual customer's selection with said incentive award selection section (13) to grant the selected incentive award to said individual customer.

6. A change management system according to claim 5, wherein said incentive award selection section (13) is incorporated in said cash dispenser (13) designated by the service provider.

7. A change management system according to any one of claims 4, 5 and 6, wherein said incentive award granting section (13) is incorporated in said cash dispenser (13) designated by the service provider.

8. A change management apparatus comprising:
(a) a change summing section (4) for summing amounts of change that are to be returned to an individual customer by a service provider each as the balance of a cash payment for a service at the service provider;
(b) a judgment section (5) for discriminating whether or not the total amount of change for said individual customer as the result of the summing by said change summing section (4) reaches a predetermined amount;
(c) a notifying section (6) for, if the result of the discrimination by said judgment section (5) is positive, notifying said individual customer of such positive result of the discrimination; and
(d) a transfer transaction section (10) for performing a transfer transaction of at least part of said total amount of change to an account of said individual customer.

9. A cash dispenser (13) for dispensing to a customer cash of an account of the customer, equipped with an incentive award granting section (13) for granting an incentive award to an individual customer if the sum of individual amounts of change that are to be returned to the individual customer by a service provider, each as the balance of a cash payment for a respective service, reaches a predetermined amount.

10. A cash dispenser (13) according to claim 9, further comprising an incentive award selection section (13) for offering a plurality of optional incentive awards for selection by said individual customer,
said incentive award granting section (13) being responsive to said individual customer's selection with said incentive award selection section (13), to said individual customer.

11. A change management method comprising the steps of:
(a) inputting change information about an amount of change that is to be returned to an individual customer by a service provider as the balance of a cash payment by the customer for a service at the service provider;
(b) summing the individual amounts of change, which have been input in said change information inputting step (a), for each customer;
(c) discriminating whether or not the total amount of change for an individual customer as the result of said change summing step (b) reaches a predetermined amount;
(d) if the result of said discriminating step (c) is positive, notifying said individual customer of such positive result of the discrimination; and
(e) performing a transfer transaction of at least part of said total amount of change to an account of said individual customer.

12. A change management method according to claim 11, further comprising the step of granting an incentive award to said individual customer if the result of said discriminating step (c) is positive.

13. A change management method according to claim 12, further comprising the step of offering a plurality of optional incentive awards for selection by said individual customer so that said incentive award selected by said individual customer in said incentive award offering step is granted to said individual customer in said incentive award granting step.

14. A program containing instructions which when executed on a computer, perform the steps of:
(a) obtaining change information about an amount of change that is to be returned to an individual customer by a service provider as the balance of a cash payment for a service at the service provider;
(b) summing the individual amounts of change, which have been input in said change information inputting step (a), for each customer;
(c) discriminating whether or not the total amount of change for an individual customer as the result of said change summing step (b) reaches a predetermined amount;
(d) if the result of said discriminating step (c) is positive, notifying said individual customer of such positive result of the discrimination; and
(e) performing a transfer transaction of at least part of said total amount of change to an account of said individual customer.

15. A computer-readable medium storing the program of claim 14.
